# EUROPÄISCHE PATENTSCHRIFT

(11) **EP 2 274 184 B1**
(45) Veröffentlichungstag und Bekanntmachung des Hinweises auf die Patenterteilung: **29.03.2017**
(21) Anmeldenummer: 09742038.4
(22) Anmeldetag: 05.05.2009
(51) Int. Cl.: B60S 1/04, B60S 1/08, B60S 1/16

(54) **VERFAHREN ZUM MONTIEREN EINES WISCHERARMS, VERFAHREN ZUM JUSTIEREN ODER BETREIBEN EINER SCHEIBENWISCHEREINRICHTUNG SOWIE SCHEIBENWISCHEREINRICHTUNG**
METHOD FOR MOUNTING A WIPER ARM, METHOD FOR OPERATING OR ADJUSTING A WIPER DEVICE AND THE WIPER DEVICE
PROCÉDÉ DE MONTAGE D'UN BRAS D'ESSUIE-GLACE, PROCÉDÉ D'AJUSTEMENT OU D'OPÉRATION D'UN DISPOSITIF D'ESSUIE-GLACE ET UN DISPOSITIF D'ESSUIE-GLACE

(30) Priorität: 06.05.2008 DE 102008001568
(43) Veröffentlichungstag der Anmeldung: 19.01.2011
(73) Patentinhaber: Robert Bosch GmbH, 70442 Stuttgart (DE)
(72) Erfinder: BRAUN, Peter, 77830 Buehlertal (DE); BECKER, Markus, 77728 Oppenau (DE); PAULI, Stephan, 77855 Achern (DE); TISCH, Florian, 77871 Renchen-Ulm (DE); FORSCHT, Michael, 77767 Appenweier (DE)
(86) Internationale Anmeldenummer: PCT/EP2009/055374
(87) Internationale Veröffentlichungsnummer: WO 2009/135820

(56) Entgegenhaltungen:
- WO-A2-90/05654
- DE-A1- 19 732 520
- DE-A1-102004 005 002

## Beschreibung

Die Erfindung betrifft ein Verfahren zum Montieren, sowie ein Verfahren zum Justieren oder Betreiben eines Wischerarms einer Scheibenwischereinrichtung. Ferner betrifft die Erfindung eine Scheibenwischereinrichtung für ein Fortbewegungsmittel.

### Stand der Technik

Moderne elektronische Scheibenwischereinrichtungen werden meist mit einem drehrichtungsumkehrbaren Wischermotor betrieben und über eine Wischerkennlinie gefahren. Hierfür wird eine Winkelposition einer Abtriebswelle des Wischermotors benötigt, wobei diese bevorzugt mittels eines Geberelements an der Abtriebswelle des Wischermotors erfasst wird. Ferner sind Scheibenwischereinrichtungen mit Wischermotoren bekannt, bei welchen keine Drehrichtungsumkehr vorgenommen wird. Bei solchen Scheibenwischereinrichtungen hängt das Wischfeld von einer Kinematik eines Gestänges oder Getriebes ab.

Um ein gefordertes Wischfeld auf einer Scheibe, z. B. einer Windschutz- oder Heckscheibe, einzuhalten, ist es notwendig, einen Wischerarm winkelkorrekt bezüglich des Wischfelds in einer Nulllage zu montieren. Um z. B. bei modernen Kraftfahrzeugen das geforderte Wischfeld einzuhalten, muss der Wischerarm mit einer Genauigkeit von ±1° bis ±2° bezüglich der Nulllage montiert werden. Bei einem Nachjustieren einer solchen Scheibenwischereinrichtung ist es wiederum notwendig, den Wischerarm mit der geforderten Genauigkeit in seiner ursprünglichen Nulllage auszurichten. Insbesondere die hohe geforderte Genauigkeit beim Positionieren des Wischerarms für die Montage bzw. das Nachjustieren, ist zeitaufwändig und daher kostenintensiv.

Die DE 197 32 520 A1 offenbart eine Scheibenwischereinrichtung für ein Kraftfahrzeug, mit einem drehrichtungsumkehrbaren Wischermotor mit einer Abtriebswelle und einem daran befestigten Wischerarm. Eine Einheit zum Erfassen einer Position der Abtriebswelle des Wischermotors gibt entsprechende Positionsinformationen an eine Elektronikeinheit weiter, in welcher daraus eine Position des Wischerarms bezüglich der Scheibe zur Steuerung des Wischermotors bestimmt wird. Innerhalb der Elektronikeinheit ist ein Wischfeld für die Scheibe einstellbar. Hierfür ist die Elektronikeinheit durch ein Schaltsignal von einem Betriebsmodus in einen Lernmodus schaltbar, in welchem die Elektronikeinheit ein bestimmtes Wischfeld für die betreffende Scheibe bzw. das betreffende Kraftfahrzeug erlernt.

Zu diesem Zweck werden an der Scheibe in einem bestimmten Abstand zueinander Anschläge befestigt, welche ein gewünschtes Wischfeld aufspannen. Der Wischermotor wird nun derart betrieben, dass er den Wischerarm gegen den jeweiligen Anschlag fahren lässt, und so innerhalb der Elektronikeinheit gelernt werden kann, wann der Wischermotor für das betreffende Wischfeld zu reversieren ist. Bevorzugt befinden sich die beiden Anschläge an einer Lehre, welche auf der Scheibe montierbar ist. Hierdurch ist es möglich, nach einer Montage des Wischerarms an der Scheibe ein Wischfeld einzustellen bzw. dieses bei einem höheren Betriebsalter erneut festzulegen.

Bei einer solchen Vorgehensweise ist es zwar nicht mehr notwendig, den Wischerarm mit einer hohen Montagegenauigkeit auf dem Wischfeld zu montieren, es ist stattdessen erforderlich, die beiden Anschläge, welche die Umkehrpositionen des Wischerarms definieren, an der Scheibe des Kraftfahrzeugs zu montieren. Ferner ist es schwierig, eine von einer Umkehrposition unterschiedliche Parkposition des Wischerarms einzustellen. Darüber hinaus ist es notwendig, den Wischerarm innerhalb seines Wischfelds auf der Scheibe zu montieren. Der Zeitvorteil einer schnelleren Montage des Wischerarms wird durch das anschließende Einstellverfahren für das Wischfeld wieder zunichte gemacht, sodass eine betriebsfertige Scheibenwischereinrichtung eine vergleichsweise hohe Montagezeit und somit auch vergleichsweise hohe Montagekosten.

Ein gattungsgemässes Verfahren zum Montieren bzw. zum Justieren eines Wischerarms sowie eine gattungsgemässe Scheibenwischervorrichtung sind aus der DE102004005002A1 bekannt.

### Aufgabenstellung

Es ist eine Aufgabe der Erfindung, ein verbessertes Verfahren zum Montieren eines Wischerarms an einer Scheibenwischereinrichtung, sowie ein verbessertes Verfahren zum Justieren oder Betreiben eines Wischerarms einer Scheibenwischereinrichtung anzugeben. Ferner ist es eine Aufgabe der Erfindung, eine verbesserte Scheibenwischereinrichtung für ein Fortbewegungsmittel, insbesondere ein Kraftfahrzeug, anzugeben.

Erfindungsgemäß soll dabei ein beliebiges Montieren des Wischerarms an der Scheibenwischereinrichtung mit einem automatischen Nulllageabgleich möglich sein, um auf eine Montage von Anschlägen auf der Scheibe für eine Definition eines Wischfelds verzichten zu können. Ferner soll es erfindungsgemäß einfach und kostengünstig möglich sein, ein beliebiges Wischfeld auf einer Scheibe zu definieren. Hierdurch soll es möglich sein, verschiedene Kraftfahrzeugtypen mit einem einzigen Typus einer Scheibenwischereinrichtung auszurüsten und dabei unterschiedliche Anwendungsfälle einzurichten. All dies soll durch die erfindungsgemäßen Verfahren bzw. die erfindungsgemäße Scheibenwischereinrichtung derart realisiert werden, dass an der Scheibenwischereinrichtung keine mechanischen Veränderungen vorgenommen werden müssen.

### Offenbarung der Erfindung

Die Aufgabe der Erfindung wird durch ein Verfahren zum Montieren eines Wischerarms an einer Scheibenwischereinrichtung gemäß Anspruch 1, ein Verfahren zum Justieren oder Betreiben eines Wischerarms einer Scheibenwischereinrichtung gemäß Anspruch 4, und einer Scheibenwischereinrichtung für ein Fortbewegungsmittel, insbesondere ein Kraftfahrzeug, gemäß Anspruch 9 gelöst. Vorteilhafte Ausgestaltungen der Erfindung ergeben sich aus den rückbezüglichen Ansprüchen.

Bei dem erfindungsgemäßen Montageverfahren wird ein Wischerarm in einer beliebigen Position auf einer Scheibe montiert und anschließend die Position des Wischerarms auf der Scheibe durch einen Sensor ermittelt. Mit Kenntnis der Position des Wischerarms kann ein Wischfeld auf der Scheibe festgelegt und entsprechend ein Wischermotor für einen Betrieb des Wischerarms angesteuert werden. In einer ähnlichen Weise arbeitet das erfindungsgemäße (Nach-)Justier- oder Betriebsverfahren eines Wischerarms einer Scheibenwischereinrichtung. Hierbei wird wiederum eine beliebige Position des Wischerarms bezüglich einer Scheibe durch einen Sensor ermittelt und anhand dieser Position ein Wischermotor für einen nachfolgenden Betrieb des Wischerarms angesteuert, wobei sich ein Wischerblatt auf einem Wischfeld der Scheibe hin- und herbewegt.

Demgemäß ist auch eine erfindungsgemäße Scheibenwischereinrichtung aufgebaut. Hierbei wird eine Position eines Wischerarms bezüglich einer Scheibe nach einer Montage des Wischerarms an der Scheibenwischereinrichtung oder für eine (Nach-)Justage des Wischerarms oder während eines Betriebs des Wischerarms, mittels eines Sensors sensiert. Hierbei kann der Sensor ein Bestandteil der Scheibenwischereinrichtung sein. Bei der erfindungsgemäßen Scheibenwischereinrichtung ist es bevorzugt, dass die Position des Wischerarms durch ein erfindungsgemäßes Verfahren ermittelt wird.

Wenn nachfolgend von einer Positionsbestimmung bzw. Positionsermittlung des Wischerarms auf bzw. bezüglich der Scheibe bzw. eines Wischfelds der Scheibe die Rede ist, so ist es erfindungsgemäß analog möglich, eine entsprechende Position eines Wischhebels des Wischerarms bzw. des Wischerblatts des Wischerarms zu bestimmen bzw. zu ermitteln. Dies rührt daher, dass die Position des Wischhebels bzw. des Wischerblatts jeweils auch eine Position des Wischerarms repräsentiert. Gegebenenfalls sind dabei Koordinatensysteme des Wischerarms und/oder des Wischhebels und/oder des Wischerblatts in ein Koordinatensystem der Abtriebswelle des Wischermotors zu transformieren bzw. umgekehrt. Darüber hinaus soll im Folgenden unter dem Begriff Wischerarm ebenfalls der Begriff Wischhebel bzw. Wischerblatt verstanden werden.

Bei den erfindungsgemäßen Verfahren oder der erfindungsgemäßen Scheibenwischereinrichtung ist es für eine Definition des Wischfelds möglich, nicht nur einen einzigen Sensor, sondern eine Mehrzahl von Sensoren anzuwenden. Darüber hinaus ist es möglich, mit einem oder einer Mehrzahl von Sensoren nicht nur eine Position des Wischerarms auf der Scheibe zu ermitteln, sondern eine Mehrzahl von Positionen. Hierbei ist es z. B. möglich, den Wischerarm per Hand oder durch einen kurzzeitigen Betrieb des Wischermotors um einen bestimmten Winkelbetrag auf der Scheibe zu verlagern und anschließend eine folgende Position des Wischerarms auf der Scheibe zu bestimmen.

Anhand der ermittelten Positionsinformation(en) des Wischerarms ist es nun erfindungsgemäß möglich, für den betreffenden Wischerarm das Wischfeld festzulegen und somit die beiden Umkehrpositionen und, falls von einer Umkehrposition unterschiedlich, eine Parkposition des Wischerarms anzusteuern. Bei der Bestimmung der Position des Wischerarms auf bzw. bezüglich der Scheibe ist es einerseits möglich, eine Montageposition bzw. eine aktuelle Lage des Wischerarms zu bestimmen, oder andererseits, insbesondere für den Fall, dass durch den Sensor keine eindeutige Position des Wischerarms ermittelt werden kann, den Wischerarm in eine andere Position zu bewegen, welche dann durch den Sensor ermittelt wird.

In bevorzugten Ausführungsformen der Erfindung befindet sich der Wischerarm bei dessen Positionsbestimmung in einer Ruhelage und bewegt sich daher auf der Scheibe nicht. Bevorzugte Positionen hierfür sind einerseits die Montageposition des Wischerarms auf der Scheibe.

Ferner ist es möglich, insbesondere für das Betriebsverfahren, eine aktuelle Position des Wischerarms in einer Bewegungsphase des Wischerarms zu ermitteln. Ferner ist es bevorzugt, dass sich der Wischerarm beim Ermitteln seiner Position innerhalb eines Wischfelds der Scheibe befindet. D. h. auch, dass es favorisiert ist, dass bei der Montage des Wischerarms auf der Scheibe, der Wischerarm mit seinem Wischerblatt auf dem Wischfeld der Scheibe und nicht außerhalb des Wischfelds auf der Scheibe zu liegen kommt.

In Ausführungsformen der Erfindung ist es bevorzugt, dass bei der Positionsermittlung des Wischerarms auf der Scheibe, dieser eine Position innehat, in welcher er durch den Sensor gut sensiert werden kann. Dies ist beispielsweise bei einer Position in einer näheren Umgebung des Sensors der Fall. Sollte eine Kamera als Sensor eingesetzt werden, so ist es bevorzugt, dass der Wischerarm in einem Bereich auf dem Wischfeld zu liegen kommt, welcher einerseits durch die Kamera gut erfasst und andererseits bevorzugt ohne Abbildungsfehler aufgenommen werden kann. Sollte ein Regensensor zum Einsatz kommen, so ist es bevorzugt, dass ein Abschnitt des Wischerarms derart auf dem Wischfeld angeordnet ist, dass dieser durch den Regensensor gut detektiert werden kann. Dies ist beispielsweise der Fall, wenn das Wischerblatt des Wischerarms über einer Optik des Regensensors angeordnet ist.

Die Positionsermittlung des Wischerarms auf der Scheibe erfolgt bevorzugt in einer internen oder externen Elektronikeinheit. Diese kann zur Scheibenwischereinrichtung gehören, von außen an die Scheibenwischereinrichtung oder eine andere Elektronikeinheit der Scheibenwischereinrichtung anschließbar oder Bestandteil einer anderen Steuerung und/oder Regelung sein. In einem Kraftfahrzeug könnte dies z. B. eine ECU (Engine Control Unit) sein. Hierbei erhält die Elektronikeinheit die entsprechenden Sensorinformationen über die Position des Wischerarms, und mit Kenntnis der geometrischen Informationen über die Scheibe oder das Wischfeld bzw. Kenntnis der verwendeten Scheibe und eines Typs der Scheibenwischereinrichtung, werden in der Elektronikeinheit die Umkehrposition und gegebenenfalls die Parkposition des Wischerarms bestimmt bzw. das Wischfeld festgelegt.

Erfindungsgemäß eignet sich jeder Sensor, mittels welchem eine Position des Wischerarms bzw. des Wischhebels bzw. des Wischerblatts auf bzw. bezüglich der Scheibe sensiert werden und anschließend mit einer ausreichenden Genauigkeit in der Elektronikeinheit bestimmt werden kann. Hierfür können passive oder aktive Sensoren eingesetzt werden, die kapazitiv, induktiv, resistiv, magnetisch oder optoelektronisch arbeiten. Insbesondere eignet sich hierfür ein Magnetfeldsensor mit einem Magnet am Wischerarm bzw. Wischhebel bzw. Wischerblatt, ein induktiver oder kapazitiver Sensor an oder in der Scheibe, oder, wie oben schon angesprochen, der Regensensor bzw. die Kamera. Bei Verwendung einer Kamera ist es einerseits möglich, eine interne Kamera anzuwenden bzw. für den Fall der Montage bzw. des Justierens des Wischerarms ist es möglich, auch eine externe Kamera anzuwenden.

Bei der Verwendung eines Sensorelements am Wischerarm ist es bevorzugt, das Sensorelement entweder möglichst nahe an der Abtriebswelle des Wischermotors, also am Wischhebel, oder am Wischerarm möglichst weit weg von der Abtriebswelle des Wischermotors, also am Wischerblatt, vorzusehen. Erstere Ausführungsform ermöglicht eine Integration des Sensors zum Ermitteln der Position des Wischerarms, in einer Elektronik des Wischermotors, letztere Variante ermöglicht eine hohe Winkelauflösung.

In bevorzugten Ausführungsformen der Erfindung wird nicht nur ein Punkt oder ein Bereich am Wischerarm durch den Sensor sensiert, sondern eine Mehrzahl von Punkten bzw. Bereichen am Wischerarm. Hierbei ist es möglich, gleichzeitig Punkte bzw. Bereiche am Wischhebel und am Wischerblatt zu sensieren. Je nach einem verwendetem Sensor können hierfür eine Mehrzahl von Sensorelementen am Wischerarm vorgesehen sein.

Gemäß der Erfindung wird die Position eines Scheibenwischers mittels des Sensors bevorzugt an einem beliebigen Punkt des Wischfelds der Scheibe erfasst. Anhand dieser Position wird das Koordinatensystem des Wischermotors, welches auf eine Motorachse orientiert ist, neu ausgerichtet. Dies kann erfindungsgemäß einmalig nach der Montage, für eine Nachjustage sowie auch laufend während des Betriebs der Scheibenwischereinrichtung durchgeführt werden.

Hierdurch reduziert sich erfindungsgemäß ein Montageaufwand des Wischerarms an der Scheibenwischereinrichtung signifikant, da nach der Montage günstigstenfalls nichts mehr getan werden muss, um einen korrekten Betrieb der Scheibenwischereinrichtung sicherzustellen, weil die Justage elektronisch erfolgt. Darüber hinaus ist erfindungsgemäß ein exakterer Betrieb der Scheibenwischereinrichtung möglich. Ferner können durch eine entsprechende Ansteuerung des Wischermotors problemlos Toleranzen oder Verschleißerscheinungen ausgeglichen werden. Des Weiteren ist es erfindungsgemäß nicht notwendig, innerhalb der Elektronikeinheit einen Lernmodus zu etablieren und bei der Montage auch keine Anschläge für den Wischerarm auf der Scheibe vorzusehen. D. h. auch, dass für einen jeweiligen Typus einer Scheibe nicht jeweils wenigstens eine Lehre herzustellen ist.

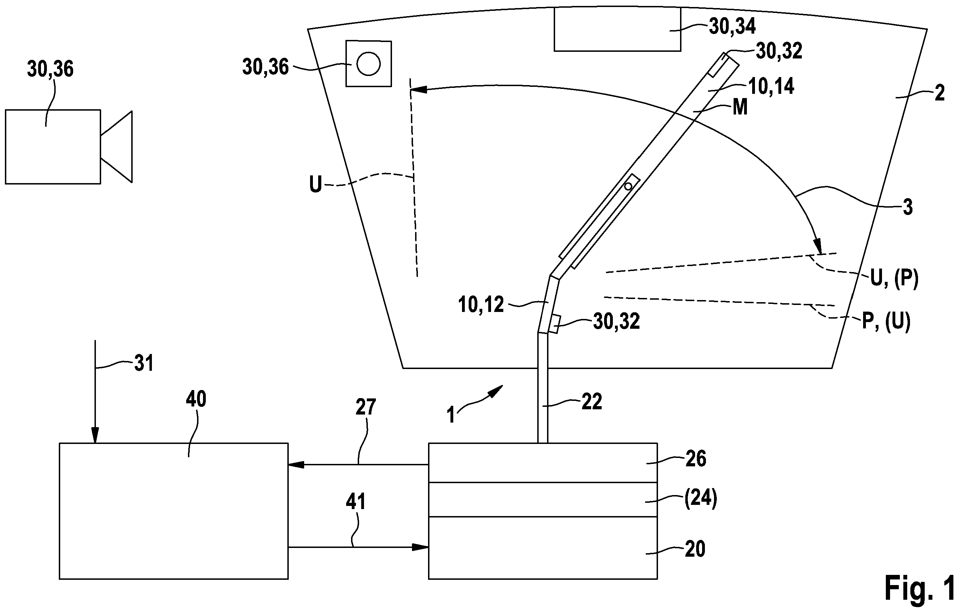

### Kurze Beschreibung der Figur

Die Erfindung wird im Folgenden anhand von Ausführungsbeispielen unter Bezugnahme auf eine Figur der Zeichnung näher erläutert. Die Figur zeigt schematisch eine erfindungsgemäße Scheibenwischereinrichtung, anhand welcher die erfindungsgemäßen Verfahren zum Montieren bzw. zum Justieren oder Betreiben eines Wischerarms der Scheibenwischereinrichtung erläutert werden.

### Ausführungsformen der Erfindung

Eine Scheibenwischereinrichtung 1 ist ein Gerät zum Säubern einer Scheibe 2, insbesondere einer Heck- 2 oder Windschutzscheibe 2 eines Kraftfahrzeugs, Flugzeugs, Schiffs oder Schienenfahrzeugs. Die im Folgenden beschriebene Scheibenwischereinrichtung 1 ist die eines Kraftfahrzeugs. Die Erfindung ist jedoch entsprechend auch auf andere Fortbewegungsmittel anwendbar.

Die Scheibenwischereinrichtung 1 weist einen oder eine Mehrzahl von Wischermotoren 20 auf, wobei meist Elektromotoren zum Einsatz kommen, welche den oder die Wischerarme 10 direkt oder über ein Gestänge 24 bzw. ein Getriebe 24 antreiben. Meist werden ein bis drei Wischerarme 10 für eine einzelne Scheibe 2 eingesetzt. Ein einzelner Wischerarm 10 weist dabei einen Wischhebel 12 und ein Wischerblatt 14 auf, welches meist mit einer Gummilippe bestückt ist, wobei der Wischhebel 12 das Wischerblatt 14 in kreissegmentartigen Bahnen über die Scheibe 2 bewegen kann. In einem solchen Wischfeld 3, welches je Wischerarm 10 von zwei Umkehrpositionen U begrenzt wird, hält das Wischerblatt 14 die Scheibe 2 und somit eine Sicht je nach Wetterbedingungen mehr oder weniger gut frei.

Bei dem bevorzugt als Elektromotor 20 ausgebildeten Wischermotor 20 unterscheidet man zwischen einem herkömmlichen Rundläufermotor 20, bei welchem eine Wischbewegung aus dem Gestänge 24 (Hebelgetriebe) entsteht, und einem Reversiermotor 20, bei welchem die Wischbewegungen aus einer Motorlaufrichtung resultieren. Der Vorteil bei Reversiermotoren 20 sind zahlreiche Komfortfunktionen, welche konventionelle Scheibenwischeinrichtungen 1 nicht bieten. Ferner kann ein solcher Reversiermotor 20 ein Getriebe 24 aufweisen.

Der Wischerarm 10 ist mit seinem Wischhebel 12 an einer Abtriebswelle 22 des Wischermotors 20 befestigt, wobei die Abtriebswelle 22 das Wischerblatt 14 über den Wischhebel 12 auf der Scheibe 2 hin- und herbewegt. Um insbesondere bei einem in seiner Drehrichtung umkehrbaren Wischermotor 20 eine Position des Wischerarms 10 bezüglich der Scheibe 2 zu bestimmen, weist die Scheibenwischereinrichtung 1 eine Einrichtung 26 zur Positionserfassung der Abtriebswelle 22 oder eine Einrichtung 26 zur Positionserfassung des Wischerarms 10 auf. Letztere Ausführungsform der Erfindung ist in der Figur nicht dargestellt.

Die Einrichtung 26 zur Positionserfassung der Abtriebswelle 22 ist mit dem Wischermotor 20 bzw. der Abtriebswelle 22 gekoppelt und sendet ein Positionssignal 27 an eine Elektronikeinheit 40. Dieses Positionssignal 27 entspricht einer Winkelposition der Abtriebswelle 22 und somit einer Position des Wischerarms 10 auf der Scheibe 2. In der nicht dargestellten alternativen Ausführungsform wird durch die Einrichtung 26 die Position des Wischerarms 10 bezüglich der Scheibe 2 direkt bestimmt und an die Elektronikeinheit 40 weitergegeben. Anhand des Positionssignals 27 steuert die Elektronikeinheit 40 über ein von ihr auszugebendes Steuersignal 41 den Wischermotor 20 an.

Damit die Elektronikeinheit 40 den Wischermotor 20 korrekt ansteuern kann, ist es notwendig, eine Initialposition des Wischerarms 10 bzw. des Wischhebels 12 bzw. des Wischerblatts 14 zu kennen und entsprechend deren Nulllagen U, P (Umkehrpositionen U, Parkposition P) korrekt anfahren zu können und so das gesamte Wischfeld 3 wischen zu können. Eine solche Initialposition wird z. B. nach einer Montage des Wischerarms 10 an der Scheibenwischereinrichtung 1 oder bei einem Nachjustieren des Wischerarms 10 eingenommen. Diese Position wird im Folgenden Momentanposition M genannt.

Gemäß der Erfindung wird bei einer Montage des Wischerarms 10 an der Scheibenwischereinrichtung 1 der Wischerarm 10 in einer willkürlichen Drehposition auf der Scheibe 2, bevorzugt mit dem Wischerblatt 14 innerhalb des Wischfelds 3 montiert. Dasselbe gilt für ein (Nach-)Justieren der Scheibenwischereinrichtung 1, wobei sich der Wischerarm 10 ebenfalls mit seinem Wischerblatt 14 innerhalb des Wischfelds 3 befinden sollte. Es ist jedoch bei beiden Ausführungsformen der Erfindung möglich, den Wischerarm 10 derart an der Scheibenwischereinrichtung 1 zu montieren, dass sich das Wischerblatt 14 außerhalb des Wischfelds 3 befindet.

Eine Ermittlung der Momentanposition M des Wischerarms 10 bzw. des Wischhebels 12 bzw. des Wischerblatts 14 erfolgt erfindungsgemäß mittels eines Sensors 30, der ein aktiver oder ein passiver Sensor 30 sein kann. Der Sensor 30 ist bevorzugt als ein kapazitiver, induktiver, resistiver, magnetischer oder optoelektronischer Sensor 30 ausgebildet. Gemäß der Erfindung sendet der Sensor 30 sein Sensorsignal 31 an die Elektronikeinheit 40, innerhalb welcher die Momentanposition M des Wischerarms 10 auf der Scheibe 2 bzw. dem Wischfeld 3 ermittelt wird. Es ist jedoch möglich, in einer anderen Elektronikeinheit aus dem Sensorsignal 31 die entsprechende Momentanposition M des Wischerarms 10 zu ermitteln. In einem solchen Fall repräsentiert das Sensorsignal 31 der Figur ein schon aufbereitetes Positionssignal 31 der Momentanposition M des Wischerarms 10.

Gemäß der Erfindung ist es nicht notwendig, den Wischerarm 10 mit seinem Wischerblatt 14 in der Park- P oder einer Umkehrposition U mit einer hohen Genauigkeit zu montieren. Erfindungsgemäß ist es möglich, direkt nach Bestimmung der Momentanposition M die erfindungsgemäße Scheibenwischereinrichtung 1 in Betrieb zu nehmen. D. h. auch, dass ein Justieren bzw. ein Nachjustieren der Scheibenwischereinrichtung 1 selbstständig z. B. automatisch nach einer gewissen Zeit oder bei einer Inbetriebnahme der Scheibenwischeinrichtung 1 vorgenommen werden kann, ohne dass dafür eine Werkstatt aufgesucht werden muss. Hierfür ist es allerdings notwendig, dass der verwendete Sensor 30 ein mit dem Kraftfahrzeug verbundener Sensor 30 ist.

Als erfindungsgemäßer Sensor 30 kommt nun insbesondere ein Regensensor 34 oder eine interne oder externe Kamera 36 in Frage. Ferner ist es in Ausführungsformen der Erfindung bevorzugt, dass ein Sensorelement des Sensors 30 ein Magnet 32 am Wischerarm 10 ist, welcher Teil eines Magnetsensors ist. Des Weiteren bevorzugt ist ein induktiver oder kapazitiver Sensor 30 an oder in der Scheibe 2.

Sollte sich ein als Magnet 32 ausgebildetes Sensorelement am Wischerarm 10 befinden, so ist es bevorzugt, dass der Magnet 32 möglichst nahe an der Abtriebswelle 22 des Wischermotors 20 angeordnet ist. Hierdurch ist es möglich, den Sensor 30 am/im Wischermotor 20 vorzusehen bzw. als Teil einer Motorelektronik des Wischermotors 20 auszubilden. Ferner ist es erfindungsgemäß möglich, den Magneten 32 möglichst weit weg von der Abtriebswelle 22 des Wischermotors 20 vorzusehen, um eine höhere Genauigkeit bei der Ermittlung der Momentanposition M des Wischerarms 10 zu erzielen. Letztere Ausführungsform ist insbesondere dann von Vorteil, wenn der Sensor 30 als ein ständiger Signalgeber für einen Betrieb der Scheibenwischereinrichtung 1 fungiert.

Lässt sich die Momentanposition M des Wischerarms 10 nicht mit einer ausreichenden Genauigkeit bestimmen, so ist es möglich, den Wischerarm 10 per Hand oder durch ein kurzes Ansteuern des Wischermotors 20 in eine andere Momentanposition M zu bewegen, in welcher die Position des Wischerarms 10 besser sensiert werden kann. Ferner ist es erfindungsgemäß bevorzugt, den Wischerarm 10 derart an der Scheibenwischereinrichtung 1 auf der Scheibe zu montieren, dass der Wischerarm 10 gut durch den Sensor 30 sensierbar ist. D. h. bei Verwendung eines Regensensors 34, sollte das Wischerblatt 14 möglichst gut durch eine Optik des Regensensors 34 erfasst werden können. Ähnliches gilt für die Kamera 36, wobei es bevorzugt ist, dass der Wischerarm 10 korrekt von der Kamera 36 aufgenommen werden kann. Kommt als Sensor 30 eine Kamera 36 in Frage, so kann dies eine fahrzeuginterne oder eine externe Kamera 36 sein.

Erfindungsgemäß ist es möglich, die Scheibenwischereinrichtung 1 auch anhand des Sensorsignals 31 zu betreiben. Hierbei dient der Sensor 30 als ein Signalgeber für die Scheibenwischereinrichtung 1, wobei bei jedem oder jedem zweiten Wischvorgang mit dem Wischerarm 10 ein Sensorsignal 31 an die Elektronikeinheit 40 ausgebbar ist. Anhand dieses Sensorsignals 31 kann dann die Scheibenwischereinrichtung 1 angesteuert werden. Es ist natürlich möglich, statt bei jedem oder jedem zweiten Wischvorgang ein anderes Sensierintervall zu wählen.

## Patentansprüche

1. Verfahren zum Montieren eines Wischerarms (10) an einer Scheibenwischereinrichtung (1), insbesondere eines Kraftfahrzeugs, wobei
der Wischerarm (10) an der Scheibenwischereinrichtung (1) in einer beliebigen Position auf einer Scheibe (2) montiert wird, **gekennzeichnet dadurch, dass** anschließend eine Momentanposition (M) des Wischerarms (10) bezüglich der Scheibe (2) abseits einer Umkehr- oder Parkposition des Wischerarms (10) durch einen Sensor (30) ermittelt wird, wobei
anhand der ermittelten Momentanposition (M) des Wischerarms (10) auf der Scheibe (2) ein Wischermotor (20) für einen Betrieb des Wischerarms (10) ansteuerbar ist und/oder angesteuert wird.

2. Verfahren gemäß Anspruch 1, wobei die Momentanposition (M) eine Montageposition des Wischerarms (10) auf der Scheibe (2) ist, oder der Wischerarm (10) aus der Montageposition in eine andere Position bewegt wird und diese als Momentanposition (M) durch den Sensor (30) ermittelt wird.

3. Verfahren gemäß Anspruch 1 oder 2, wobei die Momentanposition (M) des Wischerarms (10) in einer Ruhelage oder einer Bewegungsphase des Wischerarms (10) ermittelt wird.

4. Verfahren zum Justieren oder Betreiben eines Wischerarms (10) einer Scheibenwischereinrichtung (1), insbesondere eines Kraftfahrzeugs, **gekennzeichnet dadurch, dass**
eine Momentanposition (M) des Wischerarms (10) bezüglich einer Scheibe (3) abseits einer Umkehr- oder Parkposition des Wischerarms (10) durch einen Sensor (30) ermittelt wird, und anhand dieser ermittelten Momentanposition (M) ein Wischermotor (20) für den Betrieb des Wischerarms (10) ansteuerbar ist und/oder angesteuert wird.

5. Verfahren gemäß Anspruch 4, wobei die Momentanposition (M) des Wischerarms (10) in einer Bewegungsphase oder in einer Ruhelage des Wischerarms (10) ermittelt wird, wobei
die Ruhelage bevorzugt eine bisherige Umkehr- (U) oder Parkposition (P) oder eine Position in einer Nähe des Sensors (30) ist.

6. Verfahren gemäß einem der Ansprüche 1 bis 5, wobei die Momentanposition (M) des Wischerarms (10) auf der Scheibe (2) eine Position auf einem Wischfeld (3) der Scheibe (2) ist.

7. Verfahren gemäß einem der Ansprüche 1 bis 6, wobei durch das Ermitteln der Momentanposition (M) des Wischerarms (10) auf der Scheibe (2) unter Verwendung einer geometrischen Information über die Scheibe (2) oder das Wischfeld (3), die Umkehrpositionen (U) und/oder die Parkposition (P) des Wischerarms (10) bestimmt werden.

8. Verfahren gemäß einem der Ansprüche 1 bis 7, wobei eine Ermittlung der Momentanposition (M) des Wischerarms (10) in einer zur Scheibenwischereinrichtung (1) oder in einer zu einem Kraftfahrzeug gehörigen Elektronikeinheit (40) oder in einer externen Elektronikeinheit (40) erfolgt.

9. Scheibenwischereinrichtung für ein Fortbewegungsmittel, insbesondere ein Kraftfahrzeug, **gekennzeichnet dadurch, dass**
eine Momentanposition (M) eines Wischerarms (10) bezüglich einer Scheibe (3) zeitlich nach einer Montage des Wischerarms (10) abseits einer Umkehr- oder Parkposition des Wischerarms (10) an der Scheibenwischereinrichtung (1) ermittelbar ist, oder
eine Momentanposition (M) eines Wischerarms (10) abseits einer Umkehr- oder Parkposition des Wischerarms (10) bezüglich einer Scheibe (3) für eine Justage des Wischerarms (10) oder während eines Betriebs des Wischerarms (10) mittels eines Sensors (30) ermittelbar ist.

10. Scheibenwischereinrichtung gemäß Anspruch 9, wobei die Momentanposition (M) durch ein Verfahren nach einem der Ansprüche 1 bis 8 ermittelbar ist.

11. Verfahren oder Scheibenwischereinrichtung gemäß einem der Ansprüche 1 bis 10, wobei der Sensor (30) ein passiver oder ein aktiver Sensor (30) ist, der
bevorzugt als ein kapazitiver, ein induktiver, ein resistiver oder ein optoelektrischer Sensor (30) oder als ein Magnetfeldsensor (30) ausgebildet ist.

12. Verfahren oder Scheibenwischereinrichtung gemäß einem der Ansprüche 1 bis 11, wobei der Sensor (30):
• ein Magnetfeldsensor (30) mit einem Magnet (32) am Wischerarm (10),
• ein induktiver oder ein kapazitiver Sensor (30) an oder in der Scheibe (2),
• ein Regensensor (34) oder eine Kamera (36), oder
• allgemein ein Wegsensor, ein Bewegungsmelder, ein Lichtsensor, ein Näherungsschalter, eine Lichtschranke, ein Magnetometer, ein Optosensor oder ein Schallsensor ist.

13. Verfahren oder Scheibenwischereinrichtung gemäß einem der Ansprüche 1 bis 12, wobei der Magnet (32) für den Magnetfeldsensor (30) entweder
am Wischerarm (10) möglichst nah an einer Abtriebswelle (22) des Wischermotors (20) angeordnet ist, oder am Wischerarm (10) möglichst weit von der Abtriebswelle (22) des Wischermotors (20) entfernt vorgesehen ist.

14. Verfahren oder Scheibenwischereinrichtung gemäß einem der Ansprüche 1 bis 13, wobei ein oder eine Mehrzahl von Punkten oder Bereichen am Wischerarm (10) durch den Sensor (30) sensiert werden bzw. sensierbar sind.

15. Verfahren oder Scheibenwischereinrichtung gemäß einem der Ansprüche 1 bis 14, wobei durch den (30) oder eine Mehrzahl von Sensoren (30), eine oder eine Mehrzahl von Positionen des Wischerarms (10) auf der Scheibe (2) ermittelt werden bzw. ermittelbar sind, und
anhand dieser Positions-Informationen die Umkehrpositionen (U) und die Parkposition (P) des Wischerarms (10) bestimmt werden.

16. Verfahren oder Scheibenwischereinrichtung gemäß einem der Ansprüche 1 bis 15, wobei der Wischerarm (10) einen Wischhebel (12) und ein Wischerblatt (14) umfasst, und
statt einem Ermitteln bzw. einer Ermittlung der Momentanposition (M) des Wischerarms (10) bezüglich der Scheibe (2), eine Momentanposition (M) des Wischhebels (12) bezüglich der Scheibe (2) und/oder des Wischerblatts (14) auf der Scheibe (2) ermittelt wird bzw. ermittelbar ist.

## Claims

1. Method for mounting a wiper arm (10) on a windscreen wiper device (1), in particular of a motor vehicle, wherein
the wiper arm (10) is mounted on the windscreen wiper device (1) at any desired position on a windscreen (2), **characterized in that**
an instantaneous position (M) of the wiper arm (10) with respect to the windscreen (2) beyond a reversal or parking position of the wiper arm (10) is subsequently determined by a sensor (30), wherein
a wiper motor (20) for operating the wiper arm (10) can be actuated and/or is actuated on the basis of the determined instantaneous position (M) of the wiper arm (10) on the windscreen (2).

2. Method according to Claim 1, wherein the instantaneous position (M) is a mounting position of the wiper arm (10) on the windscreen (2), or the wiper arm (10) is moved out of the mounting position into another position, and this position is determined as an instantaneous position (M) by the sensor (30).

3. Method according to Claim 1 or 2, wherein the instantaneous position (M) of the wiper arm (10) is determined in a position of rest or a movement phase of the wiper arm (10).

4. Method for adjusting or operating a wiper arm (10) of a windscreen wiper device (1), in particular a motor vehicle, **characterized in that**
an instantaneous position (M) of the wiper arm (10) with respect to a windscreen (3) beyond a reversal or parking position of the wiper arm (10) is determined by a sensor (30), and a wiper motor (20) for operating the wiper arm (10) can be actuated and/or is actuated on the basis of this determined instantaneous position (M) .

5. Method according to Claim 4, wherein the instantaneous position (M) of the wiper arm (10) is determined in a movement phase or a position of rest of the wiper arm (10), wherein
the position of rest is preferably a previous reversal position (U) or parking position (P) or a position in the vicinity of the sensor (30).

6. Method according to one of Claims 1 to 5, wherein the instantaneous position (M) of the wiper arm (10) on the windscreen (2) is a position on a wiper field (3) of the windscreen (2).

7. Method according to one of Claims 1 to 6, wherein the reversal positions (U) and/or the parking position (P) of the wiper arm (10) are determined by determining the instantaneous position (M) of the wiper arm (10) on the windscreen (2) using geometrical information about the windscreen (2) or the wiping field (3).

8. Method according to one of Claims 1 to 7, wherein the instantaneous position (M) of the wiper arm (10) is determined in an electronic unit (40) which is associated with the windscreen wiper device (1) or in an electronic unit (40) associated with a motor vehicle or in an external electronic unit (40).

9. Windscreen wiper device for a means of locomotion, in particular a motor vehicle, **characterized in that**
an instantaneous position (M) of a wiper arm (10) with respect to a windscreen (3) can be determined chronologically after mounting of the wiper arm (10) beyond a reversal or parking position of the wiper arm (10) on the windscreen wiper device (1), or
an instantaneous position (M) of a wiper arm (10) beyond a reversal or parking position of the wiper arm (10) with respect to a windscreen (3) for adjustment of the wiper arm (10) or during operation of the wiper arm (10) can be determined by means of a sensor (30).

10. Windscreen wiper device according to Claim 9, wherein the instantaneous position (M) can be determined by means of a method according to one of Claims 1 to 8.

11. Method or windscreen wiper device according to one of Claims 1 to 10, wherein the sensor (30) is a passive or an active sensor (30) which
is preferably embodied as a capacitive, inductive, resistive or optoelectrical sensor (30) or as a magnetic field sensor (30).

12. Method or windscreen wiper device according to one of Claims 1 to 11, wherein the sensor (30) is:
• a magnetic field sensor (30) with a magnet (32) on a wiper arm (10),
• an inductive or capacitive sensor (30) on or in the windscreen (2),
• a rain sensor (34) or a camera (36), or
• generally a travel sensor, a movement pick up, a light sensor, a proximity switch, a photoelectric barrier, a magnetometer, an optical sensor or a sound sensor.

13. Method or windscreen wiper device according to one of Claims 1 to 12, wherein the magnet (32) for the magnetic field sensor (30) is either
arranged on the wiper arm (10) as close as possible to an output shaft (22) of the wiper motor (20), or is provided on the wiper arm (10) as far away as possible from the output shaft (22) of the wiper motor (20).

14. Method or windscreen wiper device according to one of Claims 1 to 13, wherein one point or area, or a multiplicity of points or areas, on the wiper arm (10) are sensed or can be sensed by the sensor (30).

15. Method or windscreen wiper device according to one of Claims 1 to 14, wherein one position, or a multiplicity of positions, of the wiper arm (10) on the windscreen (2) are determined or can be determined by the sensor (30) or by a multiplicity of sensors (30), and
the reversal positions (U) and the parking position (P) of the wiper arm (10) are determined on the basis of this position information.

16. Method or windscreen wiper device according to one of Claims 1 to 15, wherein the wiper arm (10) comprises a wiping lever (12) and a wiper blade (14), and
instead of determining the instantaneous position (M) of the wiper arm (10) with respect to the windscreen (2) an instantaneous position (M) of the wiping lever (12) with respect to the windscreen (2) and/or to the wiper blade (14) on the windscreen (2) is or can be determined.

## Revendications

1. Procédé de montage d'un bras d'essuie-glace (10) sur un dispositif d'essuie-glace (1), en particulier d'un véhicule automobile, dans lequel le bras d'essuie-glace (10) est monté sur le dispositif d'essuie-glace (1) dans une position quelconque sur une vitre (2),
**caractérisé en ce que**
ensuite, une position momentanée (M) du bras d'essuie-glace (10) par rapport à la vitre (2) à l'écart d'une position d'inversion ou de stationnement du bras d'essuie-glace (10) est détectée par un capteur (30),
un moteur d'essuie-glace (20) pour un fonctionnement du bas d'essuie-glace (10) pouvant être commandé et/ou étant commandé à l'aide de la position momentanée (M) détectée du bras d'essuie-glace (10) sur la vitre (2).

2. Procédé selon la revendication 1, dans lequel la position momentanée (M) est une position de montage du bras d'essuie-glace (10) sur la vitre (2), ou le bras d'essuie-glace (10) est déplacé de la position de montage dans une autre position et celle-ci est détectée par le capteur (30) en tant que position momentanée (M).

3. Procédé selon la revendication 1 ou 2, dans lequel la position momentanée (M) du bras d'essuie-glace (10) dans une position de repos ou dans une phase de déplacement du bras d'essuie-glace (10) est détectée.

4. Procédé pour l'ajustement ou l'entraînement d'un bras d'essuie-glace (10) d'un dispositif d'essuie-glace (1), en particulier d'un véhicule automobile, **caractérisé en ce**
**qu'**une position momentanée (M) du bras d'essuie-glace (10) par rapport à une vitre (3) à l'écart d'une position d'inversion ou de stationnement du bras d'essuie-glace (10) est détectée par un capteur (30), et un moteur d'essuie-glace (20) pour le fonctionnement du bas d'essuie-glace (10) peut être commandé et/ou est commandé à l'aide de cette position momentanée (M) détectée.

5. Procédé selon la revendication 4, dans lequel la position momentanée (M) du bras d'essuie-glace (10) est détectée dans une phase de déplacement ou dans une position de repos du bras d'essuie-glace (10),
la position de repos étant de préférence une position d'inversion (U) ou une position de stationnement (P) préalable ou une position à proximité du capteur (30).

6. Procédé selon l'une quelconque des revendications 1 à 5, dans lequel la position momentanée (M) du bras d'essuie-glace (10) sur la vitre (2) est une position sur un champ d'essuyage (3) de la vitre (2).

7. Procédé selon l'une quelconque des revendications 1 à 6, dans lequel les positions d'inversion (U) et/ou la position de stationnement (P) du bras d'essuie-glace (10) sont déterminées par la détection de la position momentanée (M) du bras d'essuie-glace (10) sur la vitre (2) en utilisant une information géométrique concernant la vitre (2) ou le champ d'essuyage (3).

8. Procédé selon l'une quelconque des revendications 1 à 7, dans lequel une détection de la position instantanée (M) du bras d'essuie-glace (10) s'effectue dans une unité électronique (40) appartenant au dispositif d'essuie-glace (1) ou appartenant à un véhicule ou dans une unité électronique externe (40).

9. Dispositif d'essuie-glace pour un moyen de propulsion, en particulier un véhicule automobile, **caractérisé en ce que**
une position momentanée (M) d'un bras d'essuie-glace (10) par rapport à une vitre (3) peut être détectée dans le temps après un montage du bras d'essuie-glace (10) à l'écart d'une position d'inversion ou d'une position de stationnement du bras d'essuie-glace (10) sur le dispositif d'essuie-glace (1), ou
une position momentanée (M) d'un bras d'essuie-glace (10) à l'écart d'une position d'inversion ou d'une position de stationnement du bras d'essuie-glace (10) par rapport à une vitre (3) peut être détectée au moyen d'un capteur (30) pour un ajustement du bras d'essuie-glace (10) ou pendant un fonctionnement du bras d'essuie-glace (10).

10. Dispositif d'essuie-glace selon la revendication 9, dans laquelle la position momentanée (M) peut être détectée par un procédé selon l'une quelconque des revendications 1 à 8.

11. Procédé ou dispositif d'essuie-glace selon l'une quelconque des revendications 1 à 10, dans lequel le capteur (30) est un capteur passif ou actif (30), qui est réalisé de préférence sous forme de capteur capacitif, inductif, résistif ou opto-électrique (30) ou sous forme de capteur à champ magnétique (30).

12. Procédé ou dispositif d'essuie-glace selon l'une quelconque des revendications 1 à 11, dans lequel le capteur (30) est :
- un capteur à champ magnétique (30) avec un aimant (32) sur le bras d'essuie-glace (10),
- un capteur inductif ou capacitif (30) sur ou dans la vitre (2),
- un capteur de pluie (34) ou une caméra (36), ou
- de manière générale un capteur de position, un détecteur de mouvement, un capteur de lumière, un interrupteur de proximité, une barrière lumineuse, un magnétomètre, un capteur optique ou un capteur acoustique.

13. Procédé ou dispositif d'essuie-glace selon l'une quelconque des revendications 1 à 12, dans lequel l'aimant (32) pour le capteur à champ magnétique (30) soit est disposé sur le bras d'essuie-glace (10) aussi près que possible d'un arbre de prise de force (22) du moteur d'essuie-glace (20) soit est prévu sur le bras d'essuie-glace (10) de manière aussi éloignée que possible de l'arbre de prise de force (22) du moteur d'essuie-glace (20).

14. Procédé ou dispositif d'essuie-glace selon l'une quelconque des revendications 1 à 13, dans lequel un ou une pluralité de points ou de zones sur le bras d'essuie-glace (10) sont ou peuvent être détectés par le capteur (30).

15. Procédé ou dispositif d'essuie-glace selon l'une quelconque des revendications 1 à 14, dans lequel une position ou une pluralité de positions du bras d'essuie-glace (10) sur la vitre (2) sont ou peuvent être détectées par le capteur (30) ou la pluralité de capteurs (30), et
à l'aide de ces informations de position, les positions d'inversion (U) et la position de stationnement (P) du bras d'essuie-glace (10) sont déterminées.

16. Procédé ou dispositif d'essuie-glace selon l'une quelconque des revendications 1 à 15, dans lequel le bras d'essuie-glace (10) présente un levier d'essuie-glace (12) et un balai d'essuie-glace (14) et
au lieu d'une détection ou d'une détermination de la position momentanée (M) du bras d'essuie-glace (10) par rapport à la vitre (2), une position momentanée (M) du levier d'essuie-glace (12) par rapport à la vitre (2) et/ou du balai d'essuie-glace (14) sur la vitre (2) est ou peut être détectée.
